Europäisches Patentamt

**European Patent Office**

**Office européen des brevets**

(11) Publication number: **0 032 818**
**A2**

## EUROPEAN PATENT APPLICATION

(21) Application number: **81300177.3**

(22) Date of filing: **15.01.81**

(51) Int. Cl.³: **G 06 F 1/00, A 61 N 1/36**

(30) Priority: **16.01.80 US 112591**

(43) Date of publication of application: **29.07.81**
**Bulletin 81/30**

(84) Designated Contracting States: **CH DE FR GB IT LI NL
SE**

(71) Applicant: **MEDTRONIC, INC., 3055 Old Highway Eight
P.O. Box 1453, Minneapolis Minnesota 55440 (US)**

(72) Inventor: **McDonald, Ray Steven, 2241 Marion Street, St.
Paul Minnesota 55113 (US)**
Inventor: **Rossing, Martin Allan, 15610 Erkium Street,
Ramsey Minnesota 55303 (US)**
Inventor: **Nintzel, James Scott, 3843 Granada Lane
North, Oakdale Minnesota 55109 (US)**

(74) Representative: **Tomlinson, Kerry John et al, Frank B.
Dehn & Co. European Patent Attorneys Imperial
House 15-19 Kingsway, London WC2B 6UZ (GB)**

(54) **Selectable data throughput microprocessor system and heart pacemaker including same.**

(57)    A microprocessor system comprises a central processor unit 99, a memory unit 100 and an input/output port 101, the central processor unit being provided with a high speed or burst clock 112 and low speed clock 113. Timing and control logic 104 is provided to select the clock used in the initiation of the execution of an instruction by the central processor unit, resulting in a variable delay between the execution of consecutive instructions. Thus, if the high speed clock 112 is selected, the instructions will be executed at a relatively high rate compared to that which will occur if the low speed clock 113 is selected. Selection of the clock rates is by special instructions causing the setting/resetting of a clock flag (H) in the processor status word 114 or by a special instruction selecting the high clock rate and loading a natural number into instruction counter 115, which number is decremented upon the execution of subsequent instructions so that when the stored number reaches zero the low clock rate is reselected, or by applying a logic level to timing and control logic 104 via control lead 116 from external logic hardware.

## Selectable data throughput microprocessor system

## and heart pacemaker including same

This invention relates to a microprocessor system and, more particularly, to a system which permits the programmer to vary the data throughput to minimize power dissipation by the system.

Microprocessor technology is presently being applied in numerous areas, including implantable medical devices such as pacemakers. These devices are usually battery powered and their service life is determined in part by the power dissipation of their electronics. Consequently, the minimization of power dissipation is critical to the acceptance of microprocessor based implantable medical devices.

The amount of power dissipated by a microprocessor system depends on both the system architecture and the implementation process selected.

Presently, most digital circuitry used in implanted devices is implemented with CMOS process technology. One desirable feature of CMOS logic is that the complementary transistor pairs draw significant current only during transitions between states. Consequently, power dissipation for CMOS devices is a linear function of the speed at which the devices are clocked or change state. The microprocessor system of the present invention is also compatible with CMOS process technology.

The effect of system architecture on power dissipation depends on the interaction between the functional groups of logic which make up the microprocessor. The complexity of these relationships make it difficult to predict power dissipation with great accuracy. However, two aspects of system architecture may be identified as dominant variables. The first of these variables is data throughput, which was mentioned earlier. In this connection, data throughput refers to the number of program instructions which are executed per unit time. In general, the greater the throughput, the greater the power dissipation.

The second related variable is system clock rate. In general, the greater the clock rate, the greater the throughput and consequently, the greater the power dissipation. The relationship between clock rate, throughput and power dissipation in prior art microprocessors may be explained as follows.

Any microprocessor system is a collection of logic devices designed to manipulate digitally encoded information and virtually all microprocessor systems have a central processing unit, a memory unit, and an input/ output unit. The memory unit comprises a number of logic devices which are used to store data and instructions in the form of digital words. The central processing unit moves information to and from memory and performs logic manipulations on this information. The input/output unit interfaces the system with the real world.

The central processing unit can be further divided into an arithmetic logic unit (ALU) which performs the data manipulations and a control unit.

The manipulations are directed by a sequence of instructions called a program. This program is usually stored in memory along with data.

Both data and program instructions are encoded as digital words. Each of these words is composed of a string of bits. Typical word size for a microprocessor system is 8 bits or 1 byte.

Program instructions are typically one or two bytes long and are usually referred to as operation codes or opcodes.

During the course of the execution of a single instruction the following events occur in sequence.

First, an opcode is fetched from memory and loaded into an instruction register. The control unit decodes the contents of the instruction register and produces a unique combination of control signals in response to the unique bit pattern of the opcode. After decoding, the sequence of operations called for by the instruction will be completed under the control of the control unit. This portion of the cycle is referred to as "execution". In summary, each program operation and instruction is initiated with a read from memory called "fetch opcode" and completed with an opcode "execution" operation.

The complete cycle just described is called an instruction cycle. During each instruction cycle the logic devices of the control unit and the rest of the microprocessor operate in synchrony with a system clock. As a consequence, each instruction cycle will require a specific number of clock cycles for completion. From this discussion it should be clear that data throughput depends on the number of instruction cycles completed per unit time. Likewise, it should be apparent that the rate at which instruction cycles are completed depends on the system clock rate.

In the prior art, microprocessor systems have had only one system clock rate, which is usually crystal controlled in the megahertz range. Therefore, these prior art systems have had fixed instruction execution cycle timing and as a consequence, fixed data throughput.

Very recently, a microcontroller has been introduced with two discrete system clock rates. Means are provided in this device for switching between these two rates to alter all of the timing parameters of the system. This technique is equivalent to substituting one clock for another.

According to the invention there is provided a selectable data throughput microprocessor system comprising:

memory means for storing data and program instructions;

an input/output means for interfacing the microprocessor system; and

a central processing unit which further includes a system clock means providing a plurality of clock rates, control logic means, having clock select logic for selecting between said plural clock rates for introducing a variable delay period between the execution of said program instructions.

Thus, in contrast to prior art devices, the microprocessor system of the present invention allows a programmer to vary data throughput by selectively introducing or deleting a delay period between successive program instructions.

This effect is achieved in the preferred embodiment of the present invention through the use of both a low-speed clock and a high-speed clock, as well as appropriate control and clock select logic. Recall that each instruction cycle begins with a read from memory operation called an opcode fetch. In the preferred embodiment of the present invention, this opcode fetch may be synchronized with either the high-speed clock or the low-speed clock. However, regardless of when the opcode is fetched all sub-instruction timing required for "opcode execution" is provided by the high-speed clock.

When the opcode fetch is synchronized with the high-speed clock the system is in the high-speed clock mode. In this mode there is no extended delay between the end of one program instruction and the beginning of the next. The execution of these concatenated instructions gives the system the throughput properties of an equivalent single clock microprocessor operating at the high-speed clock rate.

When the opcode fetch is synchronized with the low-speed clock the system is in the low-speed clock mode. In this mode the opcode fetch of a subsequent instruction will occur in synchrony with the leading edge of the next available low-speed clock cycle. A consequence of this timing sequence is the introduction of a variable delay period between the end of one instruction and the beginning of the next. The duration of this execution delay period depends on the number of high-speed clock cycles required to complete the opcode execution portion of the preceding instruction.

Selection of the high-speed clock mode is the subject of two embodiments of the present invention. In one embodiment the high-speed clock mode is selected by execution of a specialized program instruction (software). In an alternate embodiment the high-speed clock mode is selected through a hardwired control signal similar to an interrupt (hardware).

Return to the low-speed clock mode is also subject to two alternate embodiments in the present invention. In one embodiment return is effected by the execution of a specialized program instruction. In the alternate embodiment a variable portion of the instruction opcode called the variant is loaded into and interpreted by a counter as a number. This counter is decremented periodically and when the counter reaches zero, a control signal is developed which disables the high-speed clock ensuring that the next program instruction is executed in synchrony with the low-speed clock.

According to another aspect the invention provides a heart pacemaker including a selectable data throughput microprocessor system as previously set forth.

The advantages of a microprocessor system of the present invention for a heart pacemaker are included in the subsequent description of a preferred embodiment of the invention, which is given by way of example and refers to the accompanying drawings wherein:

Figure 1 is a sequence of timing diagrams, representing the system clock timing considerations, and

Figure 2 is a block diagram illustrating the functional elements of a microprocessor system according to the invention.

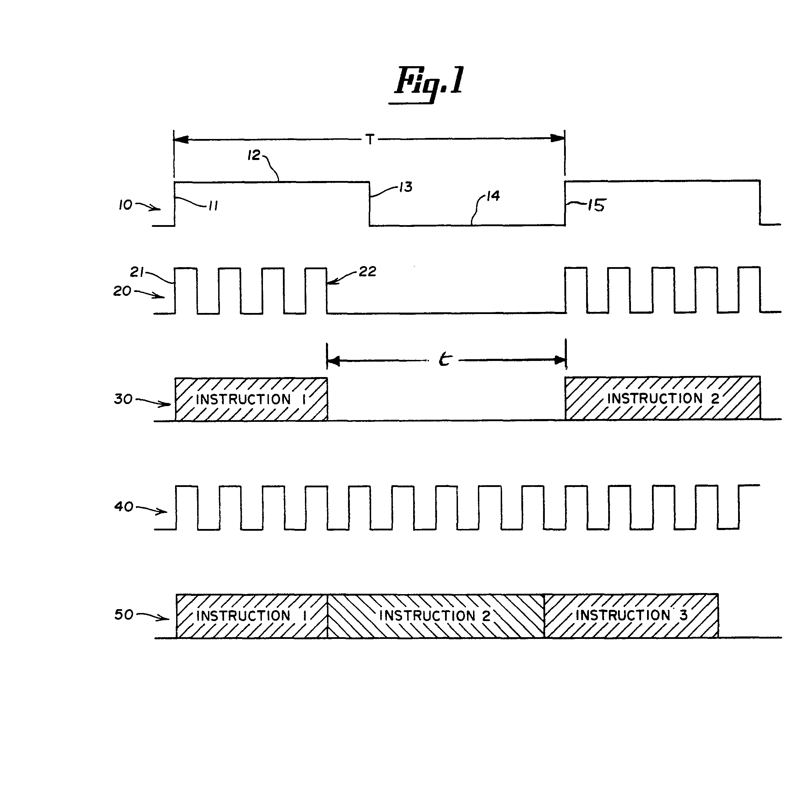

The low-speed clock mode is illustrated in Figure 1 where waveform 10 represents the output of the low-speed clock. This clock cycle has a first positive going state transition 11 followed by a "high" state 12. The second negative going state transition 13 is followed by a "low" state 14. The total clock period T corresponds to approximately 30.5 µ sec at a clock frequency of 32.768 KHz. Typically, the low-speed clock will have approximately a 50% duty cycle as indicated in the figure. The high-speed oscillator waveform 20 is exaggerated for clarity and comprises a burst of higher frequency clock pulses. This waveform will have an approximately 50% duty cycle and approximately 3µ sec clock period. The first positive going transition 21 of the burst oscillator coincides with the positive going transition 11 of the low-speed clock.

The timing of a typical instruction execution in the low-speed clock mode is shown by waveform 30.

The instruction illustrated requires four clock states and eight clock transitions for completion. These high-speed clock cycles required for opcode execution are referred to as the subinstruction timing cycles. Initiation of instruction execution coincides with the positive transition 11 of the low-speed clock and completion of execution coincides with the last negative going transition of the high-speed clock 22. As indicated in the diagram a typical instruction will be completed, well within the period T of the low-speed clock. Consequently, the instruction throughput of the microprocessor system is one instruction every T seconds in the low-speed clock mode. The variable delay of the low-speed clock mode is shown by t delay in FIG. 1. As illustrated, the subsequent instruction, labeled instruction 2 in the figure is not fetched until the next available transition 15 of the low-speed clock. Consequently, the time period t from the end of a preceeding instruction, labeled instruction 1 in the figure, to the beginning of a subsequent instruction may vary depending on the duration or number of subinstruction clock cycles required by the preceeding instruction.

The high-speed clock mode is represented by instruction timing diagram 40 and 50. As shown in waveform 40 the high-speed clock is running continuously in this mode. The instruction timing diagram 50 shows three instructions concatenated at the high-speed clock rate. In this mode, the subsequent instructions are initiated and completed under the high-speed clock, which effectively increases the instruction throughput of the microprocessor system.

The ability to vary the throughput is very desirable in an implanted medical device because of its effect on power dissipation.

In instances where the computational requirements of the implanted device do not require a high throughput, power can be conserved by operating in the low-speed clock mode.

Consider, for example, the varying throughput requirements of two cardiac pacemaker applications. In the simplest case, a pacemaker may operate in an asynchronous mode (VOO). In this mode the pacemaker will output a stimulation pulse to the heart at a fixed rate corresponding to a fixed escape interval. In this pacing modality, the microprocessor system need only keep track of escape interval information. This corresponds to a low data throughput task.

In the case of a more sophisticated dual chambered pacing modality (DDD), the pacemaker must keep track of the time synchrony between two physiological events corresponding to atrial and ventricular contractions. The absence of either or both of these two physiological events is compensated by the pacemaker which stimulates the missing event. In this pacing modality, the microprocessor must keep track of at least two physiological real time events and adjust its stimulation regime to compensate for sensed defects in the cardiac cycle. Consequently, this modality invokes higher and higher resolution time keeping functions and also requires decision-making based on the sensed events. Therefore, this modality (DDD) requires substantially more throughput than the simpler (VOO) pacing modality. The microprocessor system of the present invention allows the instantaneous throughput requirements of the pacemaker to dictate the instruction execution rate thus conserving battery power when lower data throughput is permissible.

The remaining description relates to the methods of implementing the high-speed and low-speed clock modes.

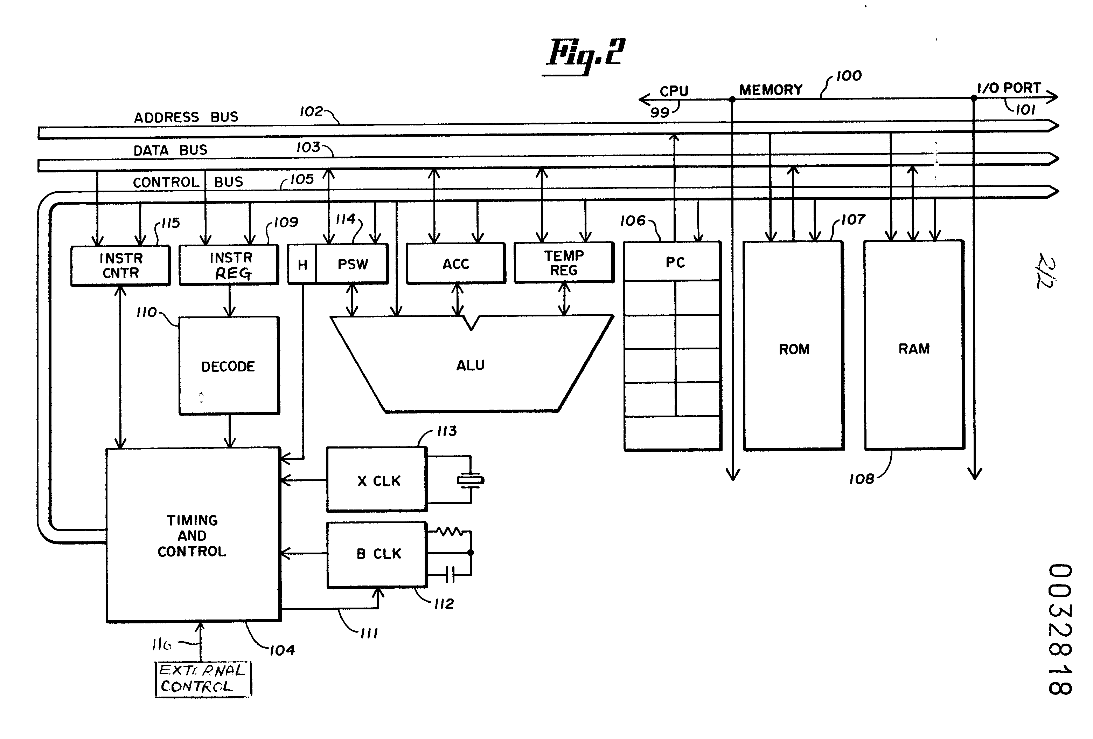

As shown in the block diagram form of FIG. 2, the microprocessor system may be divided into a central processing unit (CPU) 99, a memory unit 100, and an I/O port 101. These functional groups may communicate and exchange information over the address bus 102 and data bus 103. Access to the bus is controlled by control unit 104 within the CPU which communicates with other functional groups over the control bus 105.

During the course of an execution cycle the CPU causes the contents of the program counter 106 to be placed on the address bus 102 which indicates the location of the instruction to be executed. This instruction may be located in non-volatile memory (ROM) 107 or volatile memory (RAM) 108. The selected memory unit will place the contents of the addressed memory location addressed onto the data bus 103 where it will be transferred to instruction register 109.

The contents of the instruction register is decoded by decode logic 110. The decode logic 110 in conjunction with the timing and control unit 104 interprets the instruction and issues a sequence of control signals on the control bus 105 to control the execution of the instruction.

In one embodiment the instruction located in instruction register 109 will cause a clock flag (H) in the processor status word (PSW) 114 to be set. The H or clock flag will subsequently be interpreted by the timing and control unit 104 to require the use of the high-speed clock mode. Consequently, the timing and control unit 104 will output a burst clock enable signal 111 to initiate the operation of the high-speed or burst clock 112. In this embodiment instructions will be initiated by the state transitions of the high-speed clock for as long as the H flag is in the set condition. A subsequent instruction, when executed by the controller, will reset the H flag disabling high speed clock 112 through the operation of a control signal on control line 111. In this fashion, the system may be returned to the low-speed clock mode, where subsequent instructions will be initiated at the low frequency clock rate set by the low-speed crystal clock 113. Consequently, in this embodiment the high-speed clock mode is selected by the execution of a specialized clock select instruction and returned to the low speed clock mode by a specialized clock reset instruction. Each of the instructions operates through the H flag within the flag register 114.

In an alternate embodiment the high-speed clock mode is selected by the execution of an instruction; however, the return to the low-speed clock mode is performed automatically without the need for a special reset type of instruction. In this embodiment a specialized instruction opcode is executed. This instruction consists of a fixed bit pattern which is decoded to select the high-speed clock and a variable bit pattern called the "variant" which is decoded as a natural number by the instruction counter 115. The "variant" is proportional to the number of subsequent instructions to be initiated and executed in the high-speed clock mode. This number is decremented once after each instruction. When this counter reaches zero, control logic 104 disables the high-speed clock 112, and the next instruction is fetched in synchrony with the low-speed clock.

In another alternate embodiment the high speed clock mode is selected by a logic level being applied on control lead 116. from external logic hardware in a similar way to an interrupt.

## CLAIMS

1.      A selectable data throughput microprocessor
system comprising:

        memory means for storing data and program
instructions;

        an input/output means for interfacing the
microprocessor system; and

        a central processing unit which further
includes a system clock means providing a plurality of
clock rates, control logic means, having clock select
logic for selecting between said plural clock rates
for introducing a variable delay period between the
execution of said program instructions.

2.      A microprocessor system as claimed in claim 1
wherein said central processing unit further includes:

        an instruction counter for storing the variant
of an opcode; and,

        means for altering the value stored in said
instruction counter once during each instruction cycle;
and,

        additional logic means for signaling said clock
select logic when said value reaches a preset value.

3.      A microprocessor system as claimed in claim 1 or
2 further including:

        external logic means connected to said clock
select logic for independent control over said clock
select logic.

4.      A microprocessor system as claimed in claim 1,
2 or 3 wherein said central processing unit further includes:

a flag register having at least one clock flag set or reset through the operation of a flag set or reset instruction; and,

clock flag responsive logic for indicating the clock flag status to said clock select logic for selecting one of said clock rates.

5.      A microprocessor system as claimed in any preceding claim wherein said system clock means provides:

a first low-speed clock rate; and,

a second high-speed clock rate;

and wherein said control logic means causes said program instructions to be fetched in synchrony with a clock pulse of either of said clock rates.

6.      A heart pacemaker including a selectable data throughput microprocessor system as claimed in any preceding claim.

## _Fig.1_

_Fig.2_